# NOUVEAU FASCICULE DE BREVET EUROPEEN

(11) **EP 0 961 698 B2**
(45) Date de publication et mention de la décision concernant l'opposition: **27.02.2013**
(45) Mention de la délivrance du brevet: 11.06.2003
(21) Numéro de dépôt: 98963610.5
(22) Date de dépôt: 23.12.1998
(51) Int. Cl.: B60H 1/00

(54) **DISPOSITIF DE CHAUFFAGE-CLIMATISATION INTEGRE DANS UNE PLANCHE DE BORD DE VEHICULE AUTOMOBILE**
HEIZUNGS- UND/ODER KLIMAANLAGE, INTEGRIERT IN EINEM FAHRZEUGARMATURENBRETT
HEATING/AIR-CONDITIONING DEVICE INTEGRATED IN A MOTOR VEHICLE INSTRUMENT PANEL

(30) Priorité: 26.12.1997 FR 9716582
(43) Date de publication de la demande: 08.12.1999
(73) Titulaire: VALEO SYSTEMES THERMIQUES, 78321 Le Mesnil St Denis Cedex (FR)
(72) Inventeur: RACCOUARD, Michel, F-78310 Maurepas (FR); DAUSCH, Uwe, F-78320 Le Mesnil Saint Denis (FR)
(86) Numéro de dépôt international: PCT/FR1998/002850
(87) Numéro de publication internationale: WO 1999/033677

(56) Documents cités:
- EP-A- 0 281 457
- EP-A- 0 456 531
- EP-A- 0 684 152
- EP-A- 0 713 798
- EP-A- 0 770 508
- DE-A- 3 913 622
- DE-A- 4 336 105
- DE-A- 19 727 088
- DE-A1- 2 061 932
- DE-A1- 19 620 919
- FR-A- 2 631 287
- FR-A- 2 697 475
- FR-A- 2 756 802
- GB-A- 2 299 855
- JP-A- 60 004 410
- US-A- 4 597 323
- US-A- 4 834 170
- US-A- 4 925 468
- US-A- 4 982 579
- US-A- 5 335 718
- PATENT ABSTRACTS OF JAPAN vol. 017, no. 455 (M-1466), 20 août 1993 (1993-08-20) & JP 05 104946 A (HITACHI LTD;OTHERS: 01), 27 avril 1993 (1993-04-27)

## Description

L'invention concerne un dispositif de chauffage-climatisation de véhicule automobile.

Elle concerne plus particulièrement un dispositif du type comprenant un pulseur, un évaporateur, un radiateur de chauffage et des moyens de distribution d'air logés dans un volume à l'intérieur de la planche de bord du véhicule automobile, dans lequel l'évaporateur est disposé dans une position sensiblement verticale de manière à être traversé par un flux d'air sensiblement horizontal, et dans lequel l'évaporateur est disposé directement entre le pulseur et le radiateur de chauffage de manière à limiter les pertes de charge.

Un dispositif de chauffage-climatisation de ce type est connu d'après EP-A-0 713 798.

Dans un dispositif de ce type, le pulseur est habituellement alimenté sélectivement soit par de l'air extérieur prélevé à l'extérieur de l'habitacle du véhicule, soit par de l'air recirculé prélevé à l'intérieur de l'habitacle. Le pulseur envoie le flux d'air au travers d'un évaporateur relié à un circuit de climatisation classique et éventuellement au travers d'un radiateur de chauffage qui est classiquement traversé par un fluide chaud, à savoir le liquide de refroidissement du moteur du véhicule. Le flux d'air ainsi refroidi et/ou réchauffé est réparti, grâce aux moyens de distribution, entre différentes buses débouchant dans l'habitacle.

Un tel dispositif comprend généralement un filtre à air disposé dans le trajet du flux d'air pour retenir les impuretés véhiculées par celui-ci.

Il a été proposé récemment de regrouper les éléments constitutifs du dispositif à l'intérieur d'un volume oblong, typiquement de forme générale parallélépipédique, à l'intérieur de la planche de bord. Un tel dispositif est connu par ailleurs de DE 196 20 919.

Cette solution a pour avantage de procurer un gain de place et de permettre une standardisation des fabrications. Mais, elle impose une position horizontale à l'évaporateur, qui est néfaste à son bon fonctionnement. En outre, elle impose un long trajet de circulation au flux d'air, ce qui génère des pertes de charge et des pertes thermiques.

Le dispositif du document EP-A-0 713 798 est disposé dans la planche de bord d'un véhicule. Il comprend un premier sous-ensemble positionné près du pare-brise et un second sous-ensemble regroupant les divers organes de chauffage-climatisation.

Il offre l'avantage d'avoir un évaporateur en position sensiblement verticale mais il présente l'inconvénient d'être plus encombrant que la solution évoquée précédemment.

De plus, la gestion des flux d'air froid et d'air chaud n'est pas optimisée.

L'invention a notamment pour but de surmonter les inconvénients précités.

Elle propose à cet effet un dispositif de chauffage-climatisation selon la revendication 1.

Comme déjà indiqué, l'évaporateur est disposé dans une position sensiblement verticale, ce qui signifie que ses grandes faces sont sensiblement verticales et que le flux d'air qui pénètre par une des grandes faces pour ressortir par l'autre des grandes faces est sensiblement horizontal.

Par l'expression "disposé directement", on veut dire que l'évaporateur se trouve placé à proximité du pulseur et du radiateur de chauffage, ce qui permet de minimiser la longueur du trajet du flux d'air et de limiter les pertes de charge ainsi que les pertes thermiques. Toutefois, cela n'interdit pas qu'un accessoire, en particulier un filtre à air, soit interposé entre le pulseur et l'évaporateur ou entre l'évaporateur et le radiateur de chauffage.

De plus, un tel agencement contribue à diminuer l'encombrement global du dispositif en lui conférant une structure compacte.

De ce fait, le dispositif de chauffage-climatisation de l'invention peut occuper seulement une partie du volume disponible à l'intérieur de la planche de bord, en laissant un espace vacant susceptible d'accueillir d'autres équipements.

Le volume ainsi occupé présente un faible encombrement en hauteur et/ou en profondeur, ce qui permet de l'intégrer facilement dans une planche de bord, même dans un véhicule de faibles dimensions.

Selon encore une autre caractéristique de l'invention, les moyens de distribution d'air sont propres à distribuer un flux d'air entre une sortie dégivrage, une sortie aération médiane et une sortie pieds.

La sortie dégivrage est propre à desservir au moins une buse servant au dégivrage/désembuage du pare-brise, tandis que la sortie aération médiane est propre à desservir au moins une buse prévue sur la planche de bord du véhicule, et que la sortie pieds est propre à alimenter au moins une buse et/ou des conduits orientés vers la partie inférieure de l'habitacle.

Dans un exemple de réalisation, les moyens de distribution d'air comprennent un volet pour contrôler la sortie dégivrage et un autre volet pour contrôler à la fois la sortie aération médiane et la sortie pieds.

Dans un autre exemple, les moyens de distribution d'air comprennent un volet pour contrôler à la fois la sortie dégivrage et la sortie aération et un autre volet pour contrôler la sortie pieds.

On comprendra que les moyens de distribution d'air de l'invention peuvent être ainsi disposés entre le radiateur de chauffage et une face frontale de la planche de bord, ce qui contribue à diminuer l'encombrement.

L'évaporateur du dispositif de l'invention peut être orienté de différentes façons, du moment que ses grandes faces sont sensiblement verticales.

Ainsi, dans un exemple de réalisation, l'évaporate a ses grandes faces sensiblement verticales et parallèles à l'axe médian du véhicule.

Selon encore une autre caractéristique avantageuse de l'invention, l'évaporateur a des grandes faces verticales de forme sensiblement rectangulaire dont le rapport entre la dimension horizontale (profondeur) et la dimension verticale (hauteur) est supérieur ou égal à 2, et de préférence voisin de 2. Ceci contribue à diminuer l'encombrement en hauteur du dispositif et à permettre son implantation dans un "volume plat" disposé sensiblement à l'horizontale.

En variante, l'évaporateur a des grandes faces verticales de forme sensiblement rectangulaire dont le rapport entre la dimension horizontale (profondeur) et la dimension verticale (hauteur) est inférieur ou égal à 2,5, et de préférence voisin de 0,5. Ceci contribue à diminuer l'encombrement en profondeur du dispositif et à permettre son implantation dans un "volume plat" disposé sensiblement à la verticale.

L'orientation du radiateur de chauffage n'est pas particulièrement critique. Ainsi, ce radiateur de chauffage peut être disposé incliné par rapport à l'horizontale.

Il peut aussi être disposé verticalement et avoir des grandes faces qui sont soit parallèles à l'axe médian du véhicule, soit perpendiculaires à l'axe médian du véhicule.

Les grandes faces du radiateur de chauffage peuvent aussi être verticales et inclinées par rapport à l'axe médian du véhicule.

Dans une forme de réalisation de l'invention, les moyens de distribution d'air comprennent au moins un conduit s'étendant à l'intérieur de la planche de bord et transversalement à l'axe médian du véhicule pour alimenter les buses d'aération logées dans la planche de bord.

Ainsi, on peut prévoir un conduit desservant des buses de dégivrage/désembuage et un autre conduit desservant des buses d'aération médianes.

Selon une autre caractéristique de l'invention, le dispositif est situé contre le tablier qui sépare le compartiment moteur de l'habitacle du véhicule. Ceci permet de plaquer le dispositif contre le tablier et d'augmenter le gain de place. Le cas échéant, le tablier peut comporter un enfoncement propre à recevoir un extrémité de l'évaporateu

L'invention prévoit aussi qu'une partie au moins du dispositif, en particulier le pulseur d'air, est située au dessus de la colonne de direction du véhicule.

Dans la description qui suit, faite à titre d'exemple, on se réfère aux dessins annexés, sur lesquels :
- la figure 1 est une vue de dessus et en coupe horizontale d'un dispositif selon une première forme de réalisation ;
- la figure 2 est une vue en coupe selon la ligne II-II de la figure 1 ;
- la figure 3 est une vue en coupe selon la ligne III-III de la figure 1 ;
- la figure 4 est une vue détaillée et à échelle agrandie correspondant à la figure 2 ;
- la figure 5 est une vue en coupe selon la ligne V-V de la figure 4 ;
- la figure 6 est une vue de dessus et en coupe horizontale d'un dispositif selon une deuxième forme de réalisation ;
- la figure 7 est une vue en coupe selon la ligne VII-VII de la figure 6 ;
- la figure 8 est une vue en coupe selon la ligne VIII-VIII de la figure 6 ;
- la figure 17 est une vue en coupe transversale verticale des moyens de distribution dans une forme de réalisation ;
- la figure 18 est une vue analogue à la figure 17 dans une autre forme de réalisation ;
- la figure 19 est une vue de dessus et en coupe horizontale d'un dispositif selon une sixième forme de réalisation ;
- la figure 20 est une vue en coupe, à échelle réduite, selon la ligne XX-XX de la figure 19 ;
- la figure 21 est une vue en coupe, à échelle réduite, selon la ligne XXI-XXI de la figure ; et
- la figure 22 est une vue analogue à la figure 2 d'un mode de réalisation de l'invention.

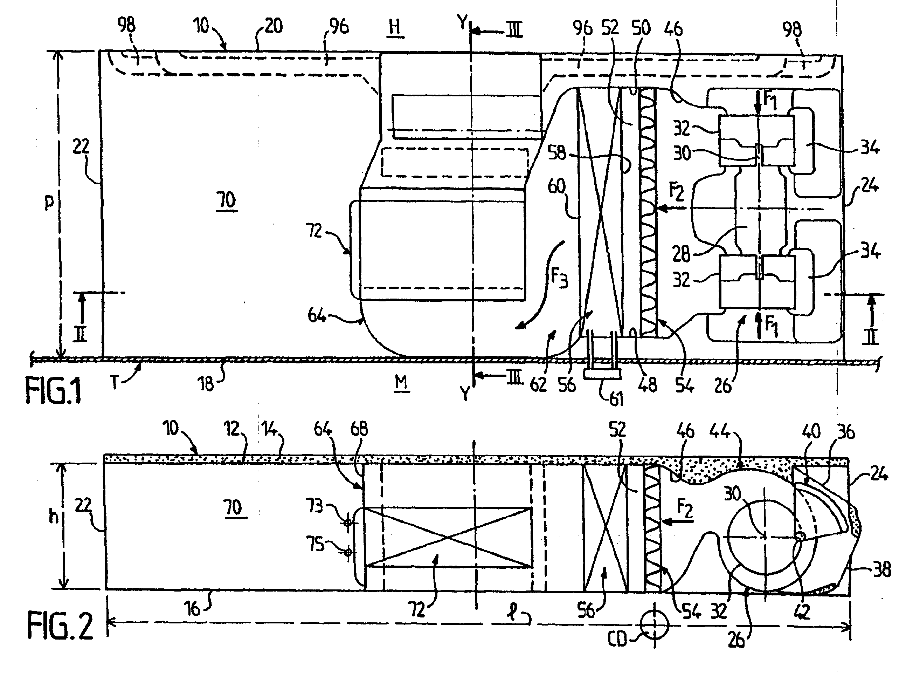

Le dispositif de chauffage-ventilation représenté aux figures 1 à 3 comprend un carter 10 de forme sensiblement parallélépipédique délimité par une face supérieure horizontale 12 pouvant être revêtue d'une garniture 14 formant le revêtement de la planche de bord et par une face inférieure horizontale 16. Le carter 12 est en outre délimité par une face antérieure verticale 18 située du côté du compartiment moteur M et une face postérieure verticale 20 située du côté de l'habitacle H, ainsi que par une face latérale verticale 22 située du côté droit et une face latérale verticale 24 située du côté gauche.

Dans la réalisation représentée, la face antérieure 18 est fermée et elle est située le long du tablier T (figures 1 et 2) qui sépare le compartiment moteur M de l'habitacle H, ce qui permet de plaquer le dispositif contre le tablier T et de procurer notamment un gain de place.

Dans une variante (non représentée), la face 18 est ouverte et le carter 10 est fermé par le tablier T, lequel contribue ainsi à délimiter le carter et à former les conduits que comporte le dispositif.

Le carter 10 possède une largeur 1 (entre les faces 22 et 24) qui peut être comprise par exemple entre 60 et 150 cm, une profondeur p (entre les faces 18 et 20) qui peut être comprise par exemple entre 20 et 50 cm, de préférence entre 30 et 40 cm, et une hauteur h (entre les faces 12 et 16) qui peut être comprise par exemple entre 10 et 30 cm, de préférence entre 15 et 20 cm.

On a représenté sur la figure 1 l'axe médian (encore appelé plan médian) YY du véhicule qui correspond à l'axe longitudinal du véhicule passant par le milieu de celui-ci.

Le carter 10 loge un pulseur d'air 26 disposé proche de la face latérale 24 c'est-à-dire du côté gauche de l'habitacle, dans la région du poste de conduite. Le passage de la colonne de direction est représenté schématiquement par les lettres CD sur la figure 2.

Le pulseur 26 comporte un moteur électrique 28 entraînant un arbre 30 en rotation autour d'un axe horizontal s'étendant parallèlement à l'axe médian YY du véhicule. Sur l'arbre 30 sont calées, de part et d'autre du moteur 28, deux turbines coaxiales 32.

Chacune des turbines est propre à être alimentée axialement par un flux d'air (flèche F1 de la figure 1) à partir d'une chambre d'entrée 34. Chacune des chambres 34 comporte une entrée 36 propre à être alimentée par de l'air extérieur (prélevé à l'extérieur de l'habitacle H) et une entrée d'air 38 propre à être alimentée par de l'air recirculé (prélevé à l'intérieur de l'habitacle H). Un volet 40 du type tambour (figure 2) est monté pivotant autour d'un axe 42 pour contrôler les entrées 36 et 38 et alimenter le pulseur 26 soit par de l'air extérieur, soit par de l'air recirculé.

Les turbines 32 sont logées à l'intérieur de deux enceintes 44, encore appelées "volutes", dans lesquelles le flux d'air est accéléré tangentiellement. Ces enceintes débouchent sur une sortie commune 46 qui constitue la sortie du pulseur et qui permet d'envoyer un flux d'air dans une direction F2 (figures 1 et 2) sensiblement horizontale. Dans l'exemple, le flux d'air est envoyé dans une direction parallèle aux faces 18 et 20, c'est-à-dire dans une direction perpendiculaire à l'axe médian YY. Le flux F2 est canalisé entre des parois latérales 48 et 50 (figure 1) qui s'étendent chacune à proximité des faces 18 et 20 du carter 10.

Les parois 48 et 50 délimitent, conjointement avec les faces 12 et 16 du carter, un conduit 52 ayant une section transversale de forme rectangulaire.

A l'intérieur du conduit 52 sont logés transversalement un filtre à air 54 et un évaporateur 56. Le filtre à air 54 est situé immédiatement à la sortie 46 du pulseui et est disposé en position verticale de manière que ses grandes faces (faces principales) soient verticales et parallèles à l'axe médian YY.

L'évaporateur 56 se trouve disposé immédiatement après le filtre 54. Il possède deux grandes faces (ou faces principales) : une face d'entrée 58 et une face de sortie 60. Ces faces 58 et 60 sont verticales et parallèles à l'axe médian YY. Il en résulte que le flux d'air F2 envoyé par le pulseur peut traverser successivement le filtre à air 54 et l'évaporateur 56 pour y être successivement filtré et refroidi.

Les grandes faces 58 et 60 de l'évaporateur ont une forme sensiblement rectangulaire et elles présentent un rapport entre la dimension horizontale (profondeur) et la dimension verticale (hauteur) qui est supérieur ou égal à 2, et de préférence voisin de 2. Ceci permet d'optimiser les performances de l'évaporateur tout en le logeant dans un volume plat disposé sensiblement à l'horizontale et présentant une faible hauteur.

Dans une variante (non représentée), les grandes faces 58 et 60 de l'évaporateur ont une forme sensiblement rectangulaire et elles présentent un rapport entre la dimension horizontale (profondeur) et la dimension verticale (hauteur) qui est inférieur ou égal à 0,5, et de préférence voisin de 0,5. Ceci permet d'optimiser les performances de l'évaporateur tout en le logeant dans un volume plat disposé sensiblement à la verticale et présentant une faible profondeur.

La profondeur et la hauteur de l'évaporateur sont à considérer par référence à la profondeur et la hauteur du carter 10.

Dans la forme de réalisation représentée, l'évaporateur 56 est logé complètement à l'intérieur de la section transversale du carter. Cependant il peut être prévu en variante (voir la figure 9) qu'une extrémité de cet évaporateur soit reçue dans un enfoncement du tablier, et cela pour augmenter encore la compacité du dispositif.

L'évaporateur 56 est relié à un connecteur 61, situé du côté du compartiment moteur M (figure 1) pour permettre sa connexion à un circuit de climatisation classique (non représenté).

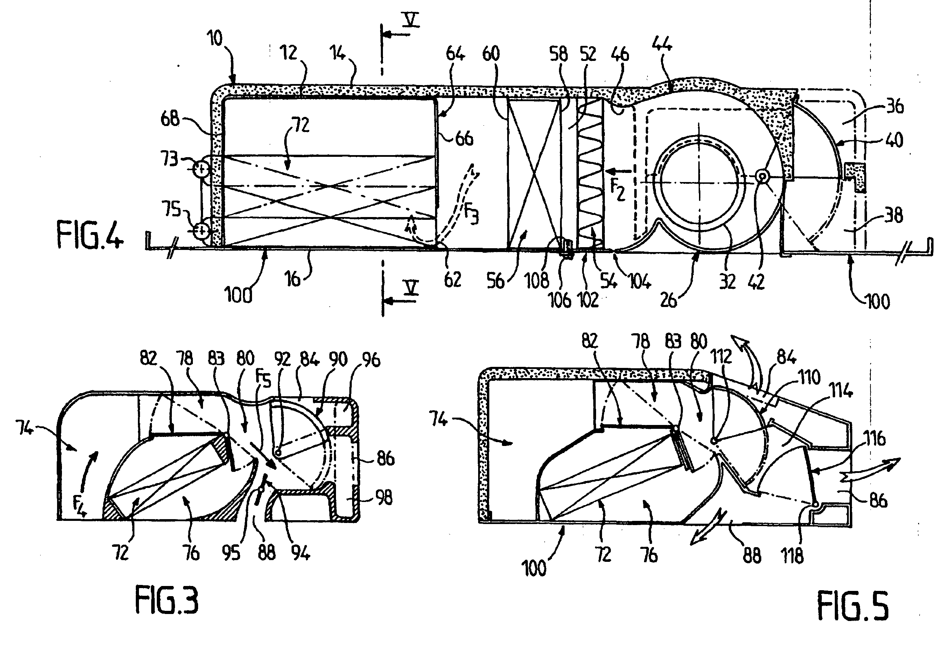

Le flux d'air (flèche F3) ayant traversé l'évaporateur 56 pénètre dans une entrée latérale 62 d'un boîtier technique 64 qui est situé dans une région centrale de la planche de bord, de part et d'autre de l'axe médian YY. Comme on le voit mieux sur la figure 4, le boîtier technique 64 comporte notamment une paroi latérale 66 qui est verticale et parallèle à l'axe médian YY, et dans laquelle est ménagée l'entrée latérale 62 précitée. Le boîtier technique comprend en outre une paroi latérale opposée 68 située du côté de la face latérale 22 du carter 10.

La paroi latérale 68 et la face latérale 22 ménagent entre elles un espace libre 70 (figures 1 et 2) pouvant accueillir un équipement tel que, par exemple, un coussin gonflable de sécurité, une boite à gants, une tablette, etc.

A l'intérieur du boîtier technique 64 est logé un radiateur de chauffage 72 qui est disposé obliquement par rapport à l'horizontale. Ce radiateur 72 comporte deux tubulures 73 et 75 (figures 2 et 4) permettant l'entrée et la sortie d'un fluide chaud, typiquement le liquide de refroidissement du moteur du véhicule.

Comme on peut le voir sur la figure 3, le flux d'air (flèche F4) pénètre dans une chambre d'entrée 74 délimitée à l'intérieur du boîtier 64. Cette chambre communique d'une part avec une branche de réchauffage d'air 76 ayant la forme d'une poche en U dans laquelle est logé le radiateur 72 et d'autre part avec une branche de transmission d'air froid 78. Ces deux branches communiquent, à leur sortie, avec une chambre de mixage 80.

Un volet de mixage 82 du type papillon est monté pivotant autour d'un axe 83 qui s'étend horizontalement et transversalement à l'axe médian YY. Le volet de mixage 82 permet de répartir le flux F4 entre les branches 76 et 78 précitées pour obtenir un flux d'air à température réglée dans la chambre de mixage 80.

Cette dernière communique avec une sortie dégivrage 84 propre à alimenter au moins une buse de dégivrage/désembuage du pare-brise, une sortie aération médiane 86 propre à alimenter au moins une buse d'aération placée sur la planche de bord du véhicule et une sortie inférieure 88 (sortie pieds) propre à desservir au moins une buse débouchant vers la partie inférieure de l'habitacle. Le flux d'air F5 à température réglée produit dans la chambre de mixage 80 peut être réparti entre les sorties 84, 86 et 88 par des moyens de distribution qui comprennent deux volets.

Ces moyens comprennent un volet 90 de type tambour monté pivotant autour d'un axe 92 qui s'étend horizontalement et transversalement à l'axe YY. Le volet 90 permet de répartir le flux F5 entre la sortie dégivrage 84 et la sortie aération 86.

Les moyens de distribution comprennent en outre un volet 94 du type papillon monté pivotant autour d'un axe 96 parallèle à l'axe 92 précité. Ce volet 94 est propre à contrôler la sortie pieds 88.

Ainsi, le boîtier technique 64 permet de dévier le flux d'air, de le réchauffer le cas échéant au travers du radiateur 72 et de le distribuer afin de le répartir entre les sorties 84, 86 et 88 en fonction du confort aérothermique souhaité par les occupants du véhicule.

La sortie dégivrage 84 alimente un conduit dégivrage 96 tandis que la sortie aération 86 alimente un conduit aération 98 (figures 1 et 3). Ces conduits s'étendent à l'intérieur de la planche de bord et transversalement à l'axe médian YY du véhicule pour alimenter les buses précitées. Ils sont implantés dans la planche de bord à proximité de la face postérieure 20 située du côté de l'habitacle H.

On se réfère maintenant aux figures 4 et 5. On retrouve sur la figure 4 les éléments de la figure 2.

Le carter 10 est supporté par une traverse horizontale 100 qui s'étend transversalement à l'axe médian du véhicule et qui est fixée au châssis (non représenté) de ce dernier.

Le carter 10 est muni d'une trappe d'accès 102 propre à permettre l'échange du filtre à air 54 après usage. Cette trappe 102 est venue de moulage avec la face inférieure 16, avantageusement en matière plastique, et elle est reliée à la face 16 par une charnière film 104 obtenue par un amincissement localisé de la matière plastique. La trappe 102 peut être verrouillée par un moyen approprié, par exemple une ou plusieurs vis 106 coopérant avec un bossage 108 venu de moulage avec la face inférieure 16 du carter.

On se réfère maintenant à la figure 5 qui montre une variante de réalisation des volets de distribution de la figure 3.

En effet, les moyens de distribution comprennent un volet 110 du type tambour monté pivotant autour,d'un axe 112 parallèle à l'axe du volet de mixage 82. Le volet 110 est propre à contrôler la sortie dégivrage 84 et une chambre 114 qui alimente la sortie aération 86 et la sortie chauffage pieds 88. Ces deux sorties sont contrôlées par un volet 116 de type drapeau monté pivotant autour d'un axe 118 parallèle à l'axe 112 précité.

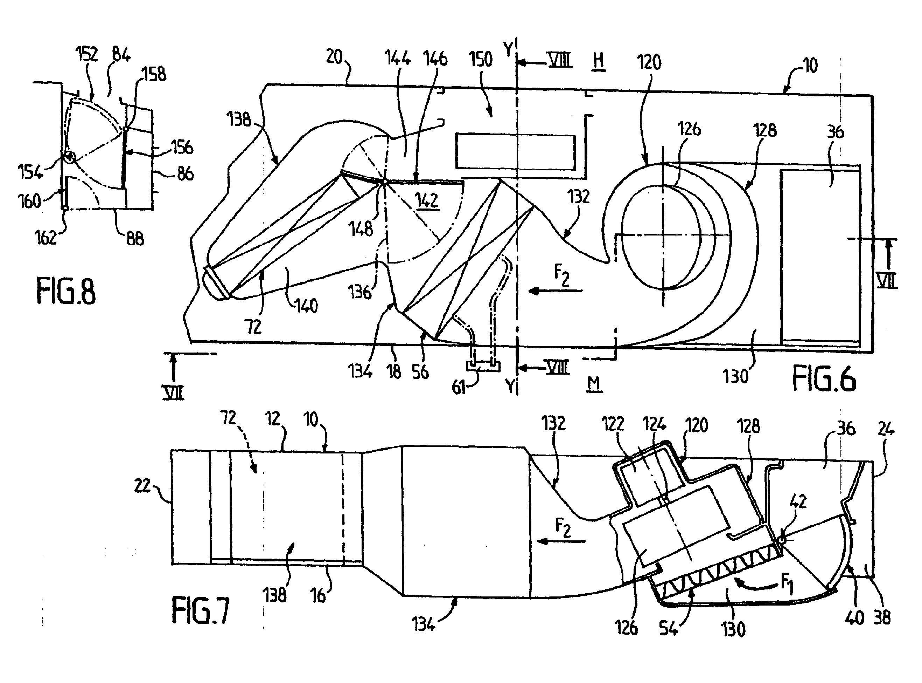

On se réfère maintenant aux figures 6 à 8 pour décrire un dispositif selon une deuxième forme de réalisation. Ce dispositif comprend également un carter 10 analogue à celui décrit précédemment et délimité par des faces 12, 16, 18, 20, 22 et 24.

Dans ce carter est logé, dans la région latérale correspondant au poste de conduite, un pulseur 120 comprenant un moteur électrique 122 entraînant en rotation un arbre 124 sur lequel est calée une seule turbine 126. L'axe de rotation de l'arbre 124 est incliné par rapport à la verticale et la turbine 126 est tournée vers le bas c'est-à-dire du côté de la face inférieure 16 du carter 10. La turbine 126 tourne à l'intérieur d'une volute 128 communiquant avec une chambre d'entrée 130 qui loge un filtre à air 54. Ce dernier se trouve ainsi placé en amont du pulseur 120.

La chambre d'entrée 130 communique avec une entrée d'air extérieur 36 et une entrée d'air recirculé 38. Un volet pivotant 40 de type tambour, analogue à celui décrit précédemment, est monté à rotation autour d'un axe 42 pour alimenter le pulseur par de l'air extérieur ou par de l'air recirculé (F1).

Le pulseur 120 possède une sortie d'air 132 qui permet d'envoyer un flux d'air F2 dans une direction sensiblement horizontale en direction d'un évaporateur 56 analogue à celui décrit précédemment et possédant une face d'entrée 58 et une face de sortie 60. Cet évaporateur est relié à un connecteur 61 situé du côté du compartiment moteur M pour établir une connexion avec un circuit de climatisation classique (non représenté).

L'évaporateur 56 est disposé verticalement, ses faces 58 et 60 étant verticales mais inclinées par rapport à l'axe médian YY du véhicule.

L'évaporateur 56 est logé dans un boîtier technique 134 qui se trouve sensiblement dans la région centrale de la planche de bord, c'est-à-dire près de l'axe médian YY.

Le boîtier 134 communique par une sortie latérale 136 avec un autre boîtier 138 logeant un radiateur de chauffage 72 analogue à celui décrit précédemment. Toutefois, le radiateur de chauffage 72 est disposé verticalement avec ses grandes faces disposées obliquement par rapport à l'axe médian YY. Le boîtier 138 délimite intérieurement une branche de réchauffage d'air 140 en forme de U, dans laquelle est logé le radiateur de chauffage 72, ainsi qu'une branche de transmission d'air froid 142. Ces ceux branches communiquent entre elles et débouchent sur une chambre de mixage 144 dans laquelle est monté à pivotement un volet de mixage 146, du type papillon, autour d'un axe vertical 148.

La chambre de mixage 144 communique avec une chambre de distribution 150 reliée à une sortie dégivrage 84, une sortie aération médiane 86 et une sortie pieds 88, analogues à celles décrites précédemment en référence aux figures 1 à 5.

Le contrôle de ces trois sorties s'effectue par trois volets. Un volet 152 du type tambour monté pivotant autour d'un axe 154 contrôle la sortie dégivrage 84. Un volet 156 du type drapeau monté pivotant autour d'un axe 158 contrôle la sortie aération médiane 86 et un volet 160 de type drapeau monté pivotant autour d'un axe 162 contrôle la sortie chauffage pieds 88 (figure 8).

La sortie 84 est reliée à des buses de dégivrage/désembuage du pare-brise. La sortie 86 est reliée à des buses d'aération médianes placées sur la planche de bord. La sortie 88 est reliée à des buses orientées vers la partie inférieure de l'habitacle.

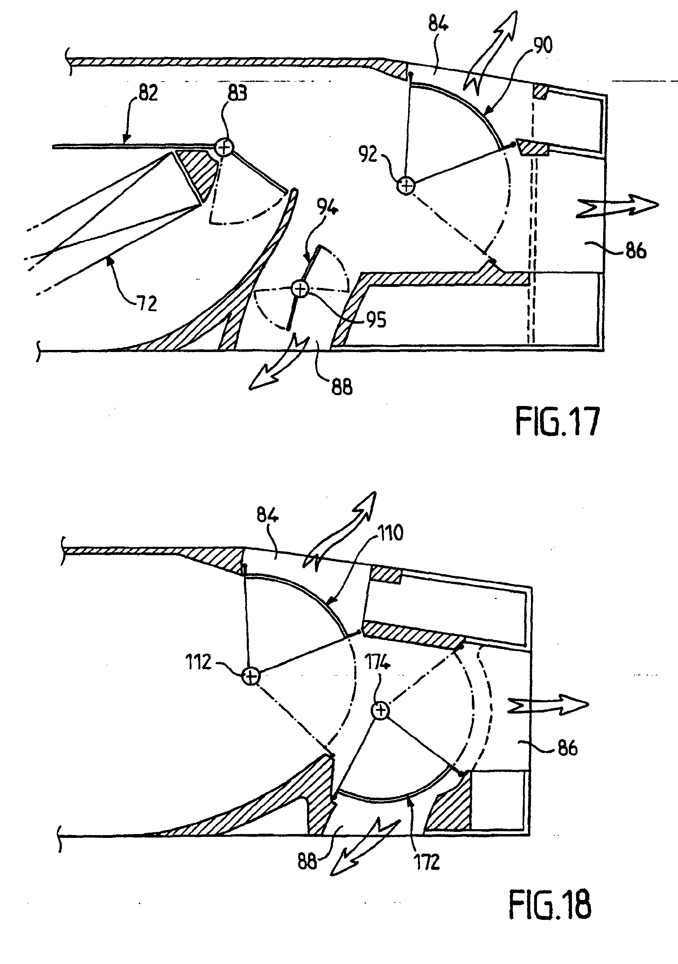

On se réfère maintenant à la figure 17 qui constitue en fait un détail de la figure 3. On retrouve la sortie dégivrage 84, la sortie aération médiane 86 et la sortie pieds 88, ainsi que le volet tambour 90 et le volet papillon 94. La sortie aération communique avec différents aérateurs (non représentés) situés sur la planche de bord. Si l'on veut assurer une fermeture complète de la sortie aération, il est nécessaire de prévoir des aérateurs ayant chacun un volet de fermeture spécifique.

Dans la forme de réalisation de la figure 18, on retrouve une structure proche de celle de la figure 5. On retrouve un volet 110 de type tambour, monté pivotant autour d'un axe 112 qui s'étend transversalement à l'axe médian du véhicule. Le volet 110 permet de contrôler la sortie dégivrage 84 et une chambre 114. Cette dernière alimente la sortie aération médiane 86 et la sortie chauffage pieds 88.

Le contrôle des sorties 86 et 88 s'effectue par un volet 172 de type tambour monté pivotant autour d'un axe 174 qui s'étend parallèlement à l'axe 112. Le volet 172 tourne sa concavité du côté de la chambre 114. Il joue sensiblement le même rôle que le volet 116 de la figure 5. Toutefois, la forme de réalisation de la figure 18 est particulièrement intéressante car les deux volets 110 et 172 permettent d'assurer une fermeture totale et une distribution complète pour chaque mode de distribution.

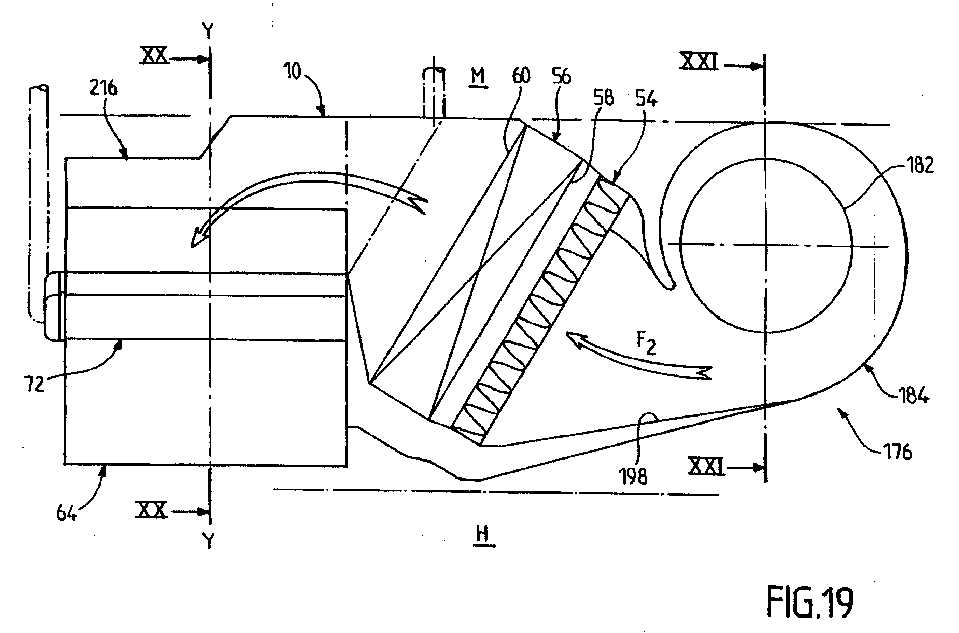

On se réfère maintenant aux figures 19 à 21 pour décrire une sixième forme de réalisation.

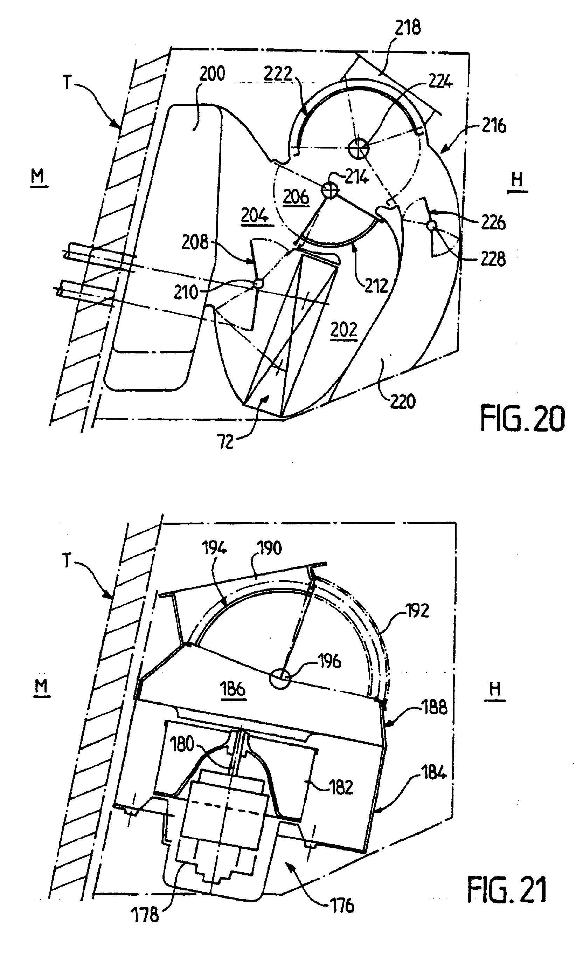

Dans cette forme de réalisation, le dispositif comprend également un carter 10 analogue à celui décrit précédemment et situé le long du tablier T qui est disposé entre l'habitacle H et le compartiment moteur M. Le dispositif est destiné à un véhicule automobile à poste de conduite à gauche. Il comporte un pulseur d'air 176 disposé du côté droit de l'habitacle dans cet exemple. Le pulseur 176 (figures 19 et 21) comprend un moteur électrique 178 entraînant en rotation un arbre 180 sur lequel est calée une turbine 182. L'axe de rotation de l'arbre 180 est sensiblement vertical et la turbine 182 dirigée vers le haut. La turbine 182 tourne à l'intérieur d'un boîtier 184, encore appelé "volute" délimitant une chambre d'entrée 186 située en partie supérieure et en face de la turbine 182. Cette chambre 186 est délimitée dans un boîtier d'entrée d'air 188 muni d'une entrée 190 pour de l'air extérieur et d'une entrée 192 pour de l'air recirculé. Ces deux entrées sont contrôlées par un volet 194 du type tambour monté pivotant autour d'un axe 196 sensiblement horizontal.

La volute 184 possède une sortie 198 (figure 19) qui permet d'envoyer un flux d'air F2 accéléré tangentiellement par la turbine, dans une direction sensiblement horizontale. La sortie 198 de la turbine loge successivement un filtre à air 54 et un évaporateur 56. Le filtre à air est disposé verticalement et ses grandes faces sont dirigées obliquement par rapport à l'axe médian YY du véhicule.

L'évaporateur 56 possède deux grandes faces, respectivement une face d'entrée 58 et une face de sortie 60. Ces deux faces sont verticales et parallèles aux grandes faces du filtre 54 et font également un angle oblique avec l'axe médian YY. Ainsi, le filtre 54 se trouve placé entre le pulseur et l'évaporateur.

La sortie 198 de la volute communique avec un boîtier technique 64 analogue à celui décrit précédemment et implanté dans la région centrale de la planche de bord, c'est-à-dire de part et d'autre de l'axe médian YY. Le boîtier 64 communique avec la sortie 198 de la volute par une entrée d'air 200 (figure 20).

Le boîtier technique 64 loge un radiateur de chauffage 72 analogue à celui décrit en référence aux figures 1 à 7. Le boîtier technique 64 délimite une branche de réchauffage d'air 202 en forme de U dans laquelle est logé le radiateur 72 et une branche de transmission d'air froid 204, ces deux branches communiquant entre elles à leur entrée et à leur sortie.

Le radiateur de chauffage 72 est disposé transversalement par rapport à l'axe médian YY du véhicule, comme on peut le voir sur la figure 19. En outre, le radiateur 72 est sensiblement vertical, comme on peut le voir sur la figure 20.

Les branches 202 et 204 communiquent avec une chambre de mixage 206 qui peut être alimentée par un flux d'air à température réglable, en faisant varier la proportion entre les flux d'air passant respectivement par les branches 202 et 204, selon la technique du "réglage sur l'air".

Pour cela, le dispositif comporte un volet 208 du type papillon monté pivotant autour d'un axe 210 et situé à l'entrée de la branche de réchauffage d'air 202, et un volet 212 du type tambour monté pivotant autour d'un axe 214 et situé à la sortie de la branche 204. Les axes 210 et 214 sont parallèles entre eux et sensiblement horizontaux.

La chambre de mixage 206 communique avec un boîtier de distribution 216 muni d'une sortie dégivrage 218, d'une sortie aération médiane (non représentée) et d'une sortie pieds 220. La sortie dégivrage 218 est propre à alimenter des buses de dégivrage/désembuage du pare-brise, la sortie aération des buses d'aération prévues sur la planche de bord et la sortie 220 des buses orientées vers la partie inférieure de l'habitacle H.

Le dispositif comporte en outre un volet 222 du type tambour monté pivotant autour d'un axe 224 parallèle aux axes 210 et 214 précités. Le volet 222 est propre à contrôler la sortie dégivrage 218 et la sortie aération médiane. En outre, un volet 226 du type papillon est monté pivotant autour d'un axe 228, parallèle à l'axe 224, pour contrôler la sortie pieds 220.

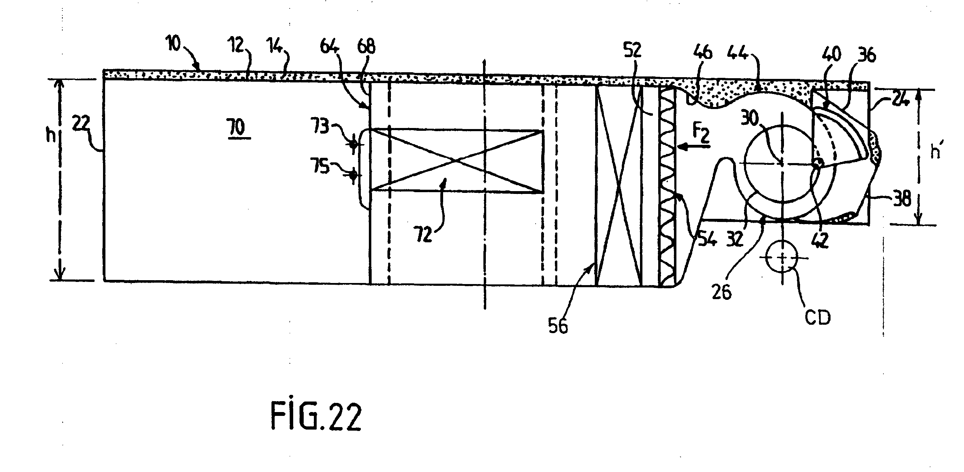

Le dispositif de la figure 22 représente un exemple de réalisation selon la présente invention et constitue une variante de celui des figures 1 et 2. Une partie du dispositif, en particulier le pulseur d'air 26, se trouve au dessus de la colonne de direction CD du véhicule. Il en résulte que la face latérale 24, située du côté du pulseur d'air 26, possède une hauteur h' qui est inférieure à la hauteur h de la face latérale 22, qui est située à l'opposé du pulseur d'air 26. La hauteur h' peut être comprise, par exemple, entre 10 et 15 cm.

Ainsi, dans toutes les formes de réalisation décrites précédemment, le dispositif de chauffage-climatisation de l'invention offre une structure particulièrement compacte logée dans un carter de forme générale parallélépipédique pouvant être implanté dans la planche de bord en occupant un volume plat disposé sensiblement à l'horizontale et présentant une faible hauteur.

Il est avantageux pour cela que l'évaporateur présente le rapport dimensionnel d'environ 2, mentionné plus haut à propos de la première forme de réalisation décrite.

Comme indiqué plus haut, il est possible en variante de disposer ce volume plat dans une position sensiblement verticale pour qu'il présente une faible profondeur. En ce cas, il est avantageux que le rapport dimensionnel précité soit voisin de 0,5.

Pour accroître encore la compacité du dispositif, il est possible dans certains cas, comme déjà indiqué, de faire en sorte qu'une partie de l'évaporateur soit reçue dans un enfoncement réalisé dans le tablier du véhicule.

Dans les formes de réalisation décrites, le dispositif n'occupe qu'une partie de la dimension transversale de la planche de bord c'est-à-dire de la largeur du véhicule.

Il en résulte que, par exemple, une partie du dispositif peut être située au-dessus de la colonne de direction du véhicule. Dans les formes de réalisation décrites précédemment, le pulseur est situé du côté du poste de conduite et le boîtier technique logeant le radiateur de chauffage est situé dans une région centrale de la planche de bord, libérant ainsi un espace libre du côté du passager, pour la mise en place d'un équipement.

Il est possible, en variante, de disposer le pulseur du côté opposé au poste de conduite (côté du passager) et de libérer l'espace libre précité du côté du poste de conduite. En pareil cas, cet espace libre permet de laisser de la place par exemple pour la colonne de direction ou d'autres équipements, comme le tableau de bord, etc.

Du fait de la compacité du dispositif de l'invention, le flux d'air circule suivant un trajet court, avec un minimum de changement de direction, ce qui limite les pertes de charge et les pertes thermiques.
Les figures 1 à 8 et 17 à 21 ne sont pas couvertes par les revendications et présentent des formes de réalisation d'un dispositif de chauffage-climatisation intégré dans une planche de bord de véhicule automobile permettant de mieux comprendre la présente invention.

## Revendications

1. Dispositif de chauffage-climatisation de véhicule automobile comprenant un carter (10) de forme sensiblement parallélépipédique logeant un pulseur (26; 120; 176), un évaporateur (56), un radiateur de chauffage (72) et des moyens de distribution d'air logés dans un volume à l'intérieur de la planche de bord, dans lequel l'évaporateur (56) est disposé dans une position sensiblement verticale de manière à être traversé par un flux d'air (F2) sensiblement horizontal, et dans lequel l'évaporateur est disposé directement entre le pulseur (26; 120; 176) et le radiateur de chauffage (72) de manière à limiter les pertes de charge, dans lequel le radiateur de chauffage (72) est logé dans une branche de réchauffage d'air (76; 140; 202) qui communique avec une branche d'air froid (78; 142; 204) et dans lequel un volet de mixage (82; 146; 208, 212) est prévu pour permettre la répartition d'un flux d'air entre les deux branches pour produire un flux d'air mixé à température ajustée,
**caractérisé en ce que** le carter (10) possède une hauteur (h) d'une face latérale (22), située à l'opposé du pulseur (26) comprise entre 10 cm et 30 cm et supérieure à une hauteur (h') d'une face latérale (24), située du coté du pulseur (26) comprise entre 10 cm et 15 cm définissant une différence de hauteur sous le pulseur pour accueillir une colonne de direction (CD) de véhicule automobile, une largeur (1) entre la face latérale (22), située à l'opposé du pulseur (26) et la face latérale (24), située du coté du pulseur (26), comprise entre 60 cm et 150 cm, et une profondeur (p) entre une face antérieure verticale (18) et une face postérieure verticale (20) comprise entre 20 cm et 50 cm.

2. Dispositif selon la revendication 1, **caractérisé en ce que** les moyens de distribution d'air sont propres à distribuer un flux d'air entre une sortie dégivrage (84), une sortie aération médiane (86) et une sortie pieds (88).

3. Dispositif selon la revendication 2, **caractérisé en ce que** les moyens de distribution d'air comprennent un volet (110) pour contrôler la sortie de dégivrage et un autre volet (116; 172) pour contrôler à la fois la sortie aération et la sortie pieds.

4. Dispositif selon la revendication 2, **caractérisé en ce que** les moyens de distribution d'air comprennent un volet (90) pour contrôler à la fois la sortie dégivrage et la sortie aération et un autre volet (94) pour contrôler la sortie pieds.

5. Dispositif selon l'une des revendications 1 à 4, **caractérisé en ce que** l'évaporateur (56) a des grandes faces (58, 60) sensiblement verticales et parallèles à l'axe médian (YY) du véhicule.

6. Dispositif selon l'une des revendications 1 à 5, **caractérisé en ce que** l'évaporateur (56) a des grandes faces verticales (58, 60) de forme sensiblement rectangulaire, dont le rapport entre la dimension horizontale (profondeur) et la dimension verticale (hauteur) est supérieur ou égal à 2, et de préférence voisin de 2.

7. Dispositif selon l'une des revendications 1 à 5, **caractérisé en ce que** l'évaporateur (56) a des grandes faces verticales (58, 60) de forme sensiblement rectangulaire, dont le rapport entre la dimension horizontale (profondeur) et la dimension verticale (hauteur) est inférieur ou 0, 5, et de préférence voisin de 0,5.

8. Dispositif selon l'une des revendications 1 à 7, **caractérisé en ce que** les moyens de distribution d'air comprennent au moins un conduit (96, 98) s'étendant à l'intérieur de la planche de bord et transversalement à l'axe médian (YY) du véhicule pour alimenter des buses d'aération logées dans la planche de bord.

9. Dispositif selon l'une des revendications 1 à 8, **caractérisé en ce qu'**il est situé contre le tablier (T) qui sépare le compartiment moteur (M) de l'habitacle (H) du véhicule.

## Claims

1. Motor vehicle heating/air conditioning device including a substantially parallelepipedal housing (10) that houses a blower (26; 120; 176), a condenser (56), a radiator (72) and means of distributing air, accommodated in a space inside the instrument panel, in which the condenser (56) is placed in an approximately vertical position, so that it is traversed by an approximately horizontal flow of air (F2), and in which the condenser is placed directly between the blower (26; 120; 176) and the radiator (72) so as to limit feed losses, in which the radiator (72) is housed in an air heating circuit (76; 140; 202) which communicates with a cold air circuit (78; 142; 204) and in which a mixing section (82; 146; 208, 212) is provided to allow a flow of air to be divided between the two circuits to produce a mixed flow of air at a set temperature, **characterized in that** the housing (10) has a height (h) on one side face (22), located opposite the blower (26), that is between 10 cm and 30 cm and greater than a height (h') on one side face (24), located on the side of the blower (26) that is between 10 cm and 15 cm, defining a difference in height beneath the blower for accommodating a motor vehicle steering column (CD), a width (1) between the side face (22) located opposite the blower (26) and the side face (24) located on the side of the blower (26) that is between 60 cm and 150 cm, and a depth (p) between a vertical anterior face (18) and a vertical posterior face (20) that is between 20 cm and 50 cm.

2. Device according to Claim 1, **characterized in that** the means of distributing the air are capable of distributing a flow of air between a de-icing vent (84), a median aeration vent (86) and a low level vent (88).

3. Device according to Claim 2, **characterized in that** the means of distributing the air include one section (110) to control the de-icing vent and another section (116; 172) to control both the median and low level vents.

4. Device according to Claim 2, **characterized in that** the means of distributing the air include one section (90) to control both the de-icing and median vents, and another section (94) to control the low level vent.

5. Device according to any of Claims 1 to 4, **characterized in that** the condenser (56) has large faces (58, 60) that are approximately vertical and parallel to the centre line (YY) of the vehicle.

6. Device according to any of Claims 1 to 5, **characterized in that** the condenser (56) has approximately rectangular large vertical sides (58, 60), with the ratio between the horizontal dimension (depth) and the vertical dimension (height) being greater than or equal to 2, and preferably close to 2.

7. Device according to any of Claims 1 to 5, **characterized in that** the condenser (56) has approximately rectangular vertical large faces (58, 60), with the ratio between the horizontal dimension (depth) and the vertical dimension (height) being less than or equal to 0.5, and preferably close to 0.5.

8. Device according to any of Claims 1 to 7, **characterized in that** the means of distributing the air include at least one duct (96, 98) extending inside the instrument panel, and at right angles to the centre line (YY) of the vehicle to feed the aeration nozzles housed in the instrument panel.

9. Device according to any of Claims 1 to 8, **characterized in that** it is situated against the bulkhead (T) separating the engine compartment (M) from the interior (H) of the vehicle.

## Patentansprüche

1. Heizungs- und/oder Klimaanlage für Kraftfahrzeuge, mit einem im Wesentlichen quaderförmigen Gehäuse (10), in dem ein Pulsator (26; 120; 176), ein Verdampfer (56), ein Heizstrahler (72) und Luftverteilmittel untergebracht sind, die in einem Raum innerhalb des Armaturenbretts untergebracht sind, wobei der Verdampfer (56) in im Wesentlichen senkrechter Stellung so angeordnet ist, dass er von einem im Wesentlichen waagrechten Luftstrom (F2) durchflossen wird, und wobei der Verdampfer unmittelbar zwischen dem Pulsator (26; 120; 176) und dem Heizstrahler (72) so angeordnet ist, dass Druckverluste begrenzt werden, wobei der Heizstrahler (72) in einem Lufterwärmzweig (76; 140; 202) untergebracht ist, der mit einem Kaltluftzweig (78; 142; 204) kommuniziert, und wobei eine Mischklappe (82; 146; 208, 212) vorgesehen ist, um die Verteilung eines Luftstroms zwischen den beiden Zweigen zu gestatten, um einen auf eine eingestellte Temperatur vermischten Luftstrom zu erzeugen,
**dadurch gekennzeichnet, dass** das Gehäuse (10) eine Höhe (h) einer Seitenfläche (22) gegenüber dem Pulsator (26) zwischen 10 cm und 30 cm und größer als eine Höhe (h') einer Seitenfläche (24) auf der Seite des Pulsators (26) zwischen 10 cm und 15 cm, wodurch ein Höhenunterschied unter dem Pulsator zur Aufnahme einer Lenksäule (CD) des Kraftfahrzeugs definiert wird; eine Breite (1) zwischen der Seitenfläche (22) gegenüber dem Pulsator (26) und der Seitenfläche (24) auf der Seite des Pulsators (26) zwischen 60 cm und 150 cm; sowie eine Tiefe (p) zwischen einer senkrechten vorderen Fläche (18) und einer senkrechten hinteren Fläche (20) zwischen 20 cm und 50 cm aufweist.

2. Anlage nach Anspruch 1, **dadurch gekennzeichnet, dass** die Luftverteilmittel geeignet sind, einen Luftstrom zwischen einem Enteisungsauslass (84), einem mittleren Belüftungsauslass (86) und einem Fußbereichsauslass (88) zu verteilen.

3. Anlage nach Anspruch 2, **dadurch gekennzeichnet, dass** die Luftverteilmittel eine Klappe (110) enthalten, um den Enteisungsauslass zu steuern, sowie eine weitere Klappe (116; 172), um zugleich den Belüftungsauslass und den Fußbereichsauslass zu steuern.

4. Anlage nach Anspruch 2, **dadurch gekennzeichnet, dass** die Luftverteilmittel eine Klappe (90) enthalten, um zugleich den Enteisungsauslass und den Belüftungsauslass zu steuern, sowie eine weitere Klappe (94), um den Fußbereichsauslass zu steuern.

5. Anlage nach einem der Ansprüche 1 bis 4, **dadurch gekennzeichnet, dass** der Verdampfer (56) im Wesentlichen senkrecht verlaufende und sich parallel zur Mittelachse (YY) des Fahrzeugs erstreckende Breitseiten (58, 60) hat.

6. Anlage nach einem der Ansprüche 1 bis 5, **dadurch gekennzeichnet, dass** der Verdampfer (56) senkrecht verlaufende, im Wesentlichen rechteckförmige Breitseiten (58, 60) hat, deren Verhältnis der waagrechten Abmessung (Tiefe) zur senkrechten Abmessung (Höhe) größer oder gleich 2 und vorzugsweise etwa 2 ist.

7. Anlage nach einem der Ansprüche 1 bis 5, **dadurch gekennzeichnet, dass** der Verdampfer (56) senkrecht verlaufende, im Wesentlichen rechteckförmige Breitseiten (58, 60) hat, deren Verhältnis der waagrechten Abmessung (Tiefe) zur senkrechten Abmessung (Höhe) kleiner oder gleich 0,5 und vorzugsweise etwa 0,5 ist.

8. Anlage nach einem der Ansprüche 1 bis 7, **dadurch gekennzeichnet, dass** die Luftverteilmittel zumindest eine Leitung (96, 98) enthalten, die sich innerhalb des Armaturenbretts und quer zur Mittelachse (YY) des Fahrzeugs erstreckt, um im Armaturenbrett untergebrachte Belüftungsdüsen zu versorgen.

9. Anlage nach einem der Ansprüche 1 bis 8, **dadurch gekennzeichnet, dass** sie sich an der Stirnwand (T) befindet, die den Motorraum (M) vom Fahrgastraum (H) des Fahrzeugs trennt.
